# EUROPEAN PATENT SPECIFICATION

(11) **EP 2 065 610 B1**
(45) Date of publication and mention of the grant of the patent: **22.09.2010**
(21) Application number: 08159702.3
(22) Date of filing: 04.07.2008
(51) Int. Cl.: F16D 65/12

(54) **Rotor for self-ventilating disc brake.**
Sich selbst belüftender Rotor für eine Scheibenbremse.
Rotor à autoventilation pour frein à disque.

(30) Priority: 27.11.2007 IT BS20070184
(43) Date of publication of application: 03.06.2009
(73) Proprietor: Fonderia di Torbole S.p.A., 24122 Bergamo (IT)
(72) Inventor: Bertoli, Gianbattista, I-25030, Roncadelle, BRESCIA (IT); Bontempi, Gianpietro, I-25063, Gardone Val Trompia, BRESCIA (IT)
(74) Representative: Pulieri, Gianluca Antonio

(56) References cited:
- WO-A-2007/117624
- GB-A- 1 530 883
- US-A- 6 053 290

## Description

. The present invention is related to a disc for a self-ventilating brake disc, in particular of the type with a double braking band, one of which joined to a central hub or stock.

. The use of discs in self-ventilating brake discs is known in the art, for not exclusively motorised vehicles, suitable for maintaining the braking capacity of the system practically unaltered even after prolonged and intensive use. In fact, using them, improved heat exchange with the air is achieved, the air passing for example between the pair of braking bands, so that the heat deriving from the braking friction is more efficiently to take away from these bands, preventing their overheating.

. Such devices, during the rotation of the wheel, aspirate air from the centre of the disc and convey it into ducts leading to the outermost radial extremity in relation to the rotation axis of the wheel. The passage of the air through these ducts allows effective removal of heat from the braking bands.

. It is therefore clear that the morphology of the mentioned ducts is a critical variable in the design of these devices, also because it affects the resistance of the braking bands to mechanical stresses and to thermal expansions.

. The known morphologies of these ducts are basically of three types: radial, curved or with pegs.

. The discs as currently made are however not free form drawbacks which limit their performance, safety and comfort.

. In particular, the mentioned duct shapes do not allow an optimal removal of heat, so that a partial evaporation of the brake liquid may occur (a phenomenon known as "vapour lock") and a resulting dangerous lengthening of the stroke of the brake pedal.

. Furthermore, the known morphologies fail to prevent a considerable deformation of the braking bands due to thermal expansion of the duct walls, with formation of cracks on the discs, vibrations and braking noises, as well as a reduction of the system efficiency.

. Also, it often happens that the braking band not joined to the hub gets hotter than the one joined, so that this establishes a thermic disparity with consequent braking vibrations.

. Lastly, in the case of ducts having a curved orientation, a left disc and right disc are required.

In WO-A-2007/117624, cf. preamble of present claim 1, at least partially these drawbacks have been overcome.

. In order to allow to profile the duct due to the outer geometry of the fins, the invention provides a disc according to claim 1.

. Further advantages may also be achieved through the additional features of the dependent claims.

. The device of the present invention will now be described in detail with reference to the attached drawings wherein:

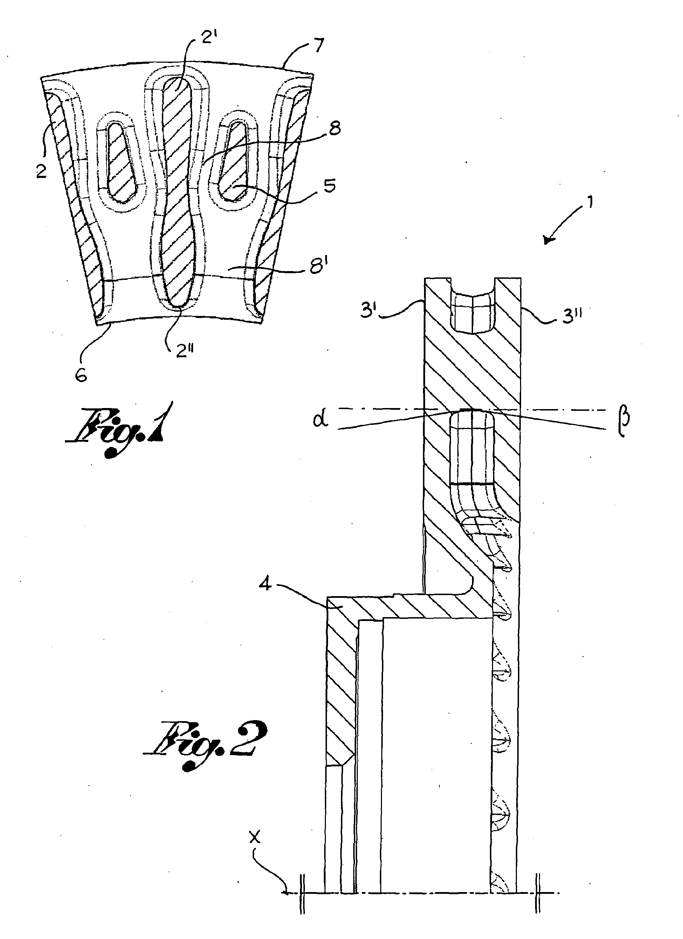

. - figure 1 shows a disc partially sectioned at the finning between the braking bands, according to a possible embodiment; and

. - figure 2 shows the disc according to the invention in partial cross-section.

. With reference to the mentioned drawings, reference numeral 1 globally indicates a disc for a self-ventilating brake disc of the type with two braking bands 3', 3".

. At least one braking band 3' is connected to a central hub or stock 4 with rotation axis X.

. The braking bands 3', 3" are parallel to each other, connected and reciprocally spaced by means of fins 2 and pegs 5.

. The fins 2 extend radially in relation to the rotation axis X and each of them alternates circumferentially with a peg 5 in order to define with it a cooling duct 8 for the passage of air.

. The radial intake of the fins 2 is an essential parameter for guaranteeing an elevated self-ventilating effect, but above all to ensure the same aerodynamic and therefore thermal performance of the disc in both rotation directions.

. According to the invention, each fin 2 extends from an inner extremity 2" to an outer extremity 2' with a cross-section which is minimal in a section substantially intermediate to said two extremities 2', 2".

. According to a preferred embodiment, starting from the inner circumference 6 the cross-section of the fins 2 increases progressively in a radial direction before decreasing again towards the minimum cross-section.

. According to a further preferred embodiment, starting from the centre of the braking bands 3', 3", where the cross-section of the fins 2 is minimal, the cross-section of such fins 2 progressively increases in a radial direction as far as the outer circumference 7.

. In other words, the fins 2 are convex at their extremities 2', 2" and/or concave in the section where the cross-section is minimal.

. In still other words, the fins 2 have a curved, i.e. undulated outline.

. In a possible embodiment, the inner extremities 2" of the fins 2 are distributed along an inner circumference 6 and, preferably, at constant pitch.

. Alternatively or additionally, the outer extremities 2' of the fins 2 are distributed along an outer circumference 7. Preferably, also the distribution of the fins along the outer circumference 7 is at constant pitch.

. According to a preferred embodiment of the invention, the inner 6 and outer 7 circumferences substantially coincide with the inner and outer circular rims radially delimiting the braking bands 3', 3". The braking bands are therefore in the shape of a circular crown.

. The fins 2 and said pegs 5 have a variable cross-section in a radial direction in order to confer to the cooling duct 8 an outwardly radially increasing cross-section.

. In a possible embodiment, in the radially innermost area of each braking band 3', 3", each pair of adjacent fins 2. defines at least one cooling duct 8', with a outwardly radially increasing cross-section for the passage of air.

. In other words, moving away from the innermost radial area of each braking band 3', away from the rotation axis X, the fins 2 diverge from each other increasing the cross-section for the passage of air and consequently also the heat exchange surface between the braking band and the air, at the same time improving the effect of heat withdrawal from the surface and the centrifugal pump effect, of which more will be said later.

. The assembly of the cooling ducts 8, 8' defines the ventilating chamber of the brake disc.

. The cooling ducts 8', radially closer to the rotation axis X, are suitable for aspirating cold air from the centre of the brake disc. They convey the cold air inside them and make it pass through the radially outermost cooling ducts 8, not defined by two fins, but by a peg 5 and an adjacent fin 2. The cold air is then conveyed to cool the braking bands and, lastly, the heated air is expelled through the extremities of the ducts 8 opening onto the outer circumference 7.

. In other words, the rotating brake discs make use of the centrifugal pump effect, effect emphasised by the structure of the disc illustrated below.

. In a preferred embodiment, the maximum cross-section of the pegs 5 is situated at the centre of the braking bands 3', 3". Preferably, it is positioned where the cross-section of the fins 2 is minimal.

. In one possible embodiment, the pegs 5 have a progressively radially decreasing cross-section towards their outermost extremities.

. In other words, the pegs 5 are "drop"-shaped with the extremity with a smaller cross-section facing outwardly.

. Both, the fins 2 and the pegs 5 have a radially variable cross-section, but, in order to produce an outwardly increasing cross-section of the cooling ducts 8 for effective exploitation of the centrifugal pump effect, in accordance with a preferred embodiment, the cross-section of the pegs 5 decreases radially faster than the cross-section of the fins 2 increases.

. Preferably, the greatest cross-section of the pegs 5 is positioned in the radial centre of the braking bands 3', 3", with a maximum deviation from the centre of 15% and, even more preferably, of 10%.

. According to an advantageous embodiment of the invention, the length of each peg 5 is approximately 20-40% of the radial extension of the braking bands 3', 3" and, preferably, approximately 25-35%.

. Alternatively or additionally, the overall contact surface of fins 2 and pegs 5 with the braking band 3' connected to the central hub or stock 4 is smaller than the contact surface of the fins 2 and pegs 5 with the other braking band 3".

. In other words, the contact surface of fins 2 and pegs 5 with each braking band 3', 3" represents the overall area of each braking band occupied by fins and pegs. Diversely, the residual surface free from fins and pegs is a free surface which defines the cooling ducts 8, 8'.

. This asymmetric distribution of the contact surfaces makes for better conduction of the friction heat through both braking bands, enabling an improved division of heat compared to state-of-the-art discs and preventing the formation of excessive temperature gradients between the inner band 3' and the outer band 3".

. According to an advantageous embodiment the overall contact surface of fins 2 and pegs 5 with the braking band 3' connected to the central hub or stock 4 occupies from 35% to 45% of the total inner surface of the said band 3' and, preferably, 40%.

. Preferably, the contact surface of the fins 2 with the braking band 3' connected to the central hub or stock 4 occupies from 60% to 80% of the overall contact surface and, preferably, 70%.

. According to a further advantageous embodiment, the contact surface of the pegs 5 with the braking band 3' connected to the central hub or stock 4 occupies from 20% to 40% of the overall contact surface and, preferably, 30%.

. According to an analogous embodiment, the overall contact surface of fins 2 and pegs 5 with the braking band 3" not connected to the central hub or stock 4 occupies from 40% to 50% of the total inner surface of this band 3" and, preferably, 44%.

. Preferably, the contact surface of the fins 2 with the braking band 3" not connected to the central hub or stock 4 occupies from 55% to 75% of the overall contact surface and, preferably, 63%.

. Calculating by difference, the contact surface of the pegs 5 with the braking band 3" not connected to the central hub or stock 4 occupies between 25% and 45% of the overall contact surface and, preferably, 37%.

. Preferably, each peg 5 is connected to each braking band 3', 3" through a connection surface the tangent of which forms an angle α, β in relation to an axis parallel to the rotation axis X. Such angle β formed by the band 3" not connected to the hub 4 is greater than the angle α formed by the band 3' connected to the hub 4.

. In one embodiment variation, each fin 2 is connected to each braking band 3', 3" through a connection surface the tangent of which forms an angle α, β in relation to an axis parallel to the rotation axis X. These angles α, β are preferably symmetrical on each braking band 3', 3" but variable along the outline of the fin, in a manner to ensure thermal homogeneity on both braking bands.

. Usually the contact angles α, β are also called draft angles in the trade. In fact, according to a possible embodiment, the disc 1 is obtained by casting, and the connection surfaces result from the shakeout of the molten disc.

. According to such embodiment, the connection surfaces of the fins 2 are inclined in relation to an axis parallel to the rotation axis X along the outline of the fin 2.

. The presence of various draft angles on the two contact surfaces with the braking bands 3', 3" explains the different percentage occupation of the fins 2 and pegs 5 on the two braking bands 3', 3".

. In the light of what was explained above, it is a technically significant result that an asymmetric division of the heat on asymmetric braking bands (band 3' is directly connected to the central hub or stock 4, while the outer band 3" is not) produces a symmetric temperature in the two braking bands 3', 3".

. According to yet a further embodiment, one braking band 3' is integral with the central hub or stock 4.

. Innovatively the disc for the brake disc of the present invention allows a smaller overheating of the disc even during prolonged and intensive use, preventing the dangerous fading effect.

. Innovatively the disposition of fins and pegs in the disc for the brake disc of the present invention allows to reduce the thickness of each braking band, thus producing lighter discs than state-of-the-art discs. The entity of such reduction of thickness is restricted by the ratio between the distance of the two braking bands (the so-called "ventilation chamber lumen") and the thickness of each surface. This ratio is between 1,3 and 2,5. The solution thus obtained translates into a weight reduction of 9-12%.

. Innovatively, furthermore, the self-ventilating effect is equally effective in both rotation directions, not requiring the management of two disc geometries in order to guarantee the same performance.

. Advantageously, the invention allows an homogenous thermic distribution on both braking bands, obtained through the greater percentage of anchorage between the fin and the peg with the surface not directly joined to the central hub or stock.

. Furthermore, the invention makes it possible to minimize the formation of cracks on the braking bands, with a considerable advantage in terms of functionality, reliability and comfort for the user.

. Lastly, the disc of the present invention considerably reduces braking noise, especially compared to the discs with straight fins of the known technique.

. A person skilled in the art may bring modifications, adaptations and replacements of parts with others functionally equivalent, to the embodiments of the disc described above in order to satisfy contingent requirements while remaining within the sphere of protection of the following claims.

## Claims

1. Disc (1) for self-ventilating brake disc of the type with two braking bands (3', 3"), at least one (3') of which connected to a central hub or stock (4) having a rotation axis (X), where said braking bands (3', 3") are parallel to each other, connected and reciprocally spaced by fins (2) and pegs (5) extending in a radial direction in relation to the rotation axis (X), where each fin (2) alternates circumferentially with a peg (5) in order to define with it a cooling duct (8) for the passage of air, wherein said fins (2) and said pegs (5) have a variable cross-section in a radial direction in order to confer to the cooling duct (8) an outwardly radially increasing cross-section,
**characterised in that** each fin (2) extends between an inner extremity (2") and an outer extremity (2') with a cross-section that is minimal in a section substantially intermediate to said two extremities (2', 2").

2. Disc (1) according to claim 1, wherein the greatest cross-section of the pegs (5) is positioned where the cross-section of the fins (2) is minimal.

3. Disc (1) according to any of the previous claims, wherein the fins (2) are convex at their extremities (2', 2") and concave in the section where the cross-section is minimal.

4. Disc (1) according to any of the previous claims, wherein the inner extremities (2") of the fins (2) are distributed along an inner circumference (6), and wherein the outer extremities (2') of the fins (2) are distributed along an outer circumference (7).

5. Disc (1) according to claim 4, wherein said inner (6) and outer (7) circumferences substantially coincide with inner and outer circular rims which radially delimit the braking bands (3', 3").

6. Disc (1) according to one of the claims 4 or 5, wherein starting from the centre of the braking bands (3', 3") the cross-section of the fins (2) progressively increases in a radial direction as far as the outer circumference (7).

7. Disc (1) according to any of the previous claims, wherein in the innermost radial area of each braking band (3', 3") each pair of adjacent fins (2) defines at least one cooling duct (8'), with an outwardly radially increasing cross-section for the passage of air.

8. Disc (1) according to any of the previous claims, wherein the largest cross-section of the pegs (5) is positioned at the centre of the braking bands (3', 3").

9. Disc (1) according to any of the previous claims, wherein the pegs (5) have a progressively radially decreasing cross-section towards their outermost extremities.

10. Disc (1) according to any of the previous claims, wherein the length of each peg (5) is approximately 20-40% of the radial extension of the braking bands (3', 3") and, preferably, approximately 25-35%.

11. Disc (1) according to any of the previous claims, wherein the overall contact surface of the fins (2) and pegs (5) with the braking band (3') connected to the central hub or stock (4) is smaller than the contact surface of the fins (2) and pegs (5) with the other braking band (3").

12. Disc (1) according to any of the previous claims, wherein the overall contact surface of fins (2) and pegs (5) with the braking band (3') connected to the central hub or stock (4) occupies between 35% and 45% of the total inner surface of said band (3') and, preferably, 40%.

13. Disc (1) according to claim 12, wherein the contact surface of the fins (2) with the braking band (3') connected to the central hub or stock (4) occupies between 60% and 80% of the overall contact surface and, preferably, 70%.

14. Disc (1) according to any of the previous claims, wherein the overall contact surface of fins (2) and pegs (5) with the braking band (3") not connected to the central hub or stock (4) occupies between 40% and 50% of the total inner surface of said band (3") and, preferably, 44%.

15. Disc (1) according to claim 14, wherein the contact surface of the fins (2) with the braking band (3") not connected to the central hub or stock (4) occupies between 55% and 75% of the overall contact surface and, preferably, 63%.

16. Disc (1) according to any of the previous claims, wherein each peg (5) is connected to each braking band (3', 3") by a connection surface the tangent of which forms an angle (α, β) in relation to an axis parallel to the rotation axis (X), and wherein the angle (β) formed with the band (3") not connected to the hub (4) is greater than the angle (α) formed with the band (3') connected to the hub (4).

17. Disc (1) according to any of the previous claims, wherein each fin (2) is connected to each braking band (3', 3") through a connection surface the tangent of which forms an angle (α, β) in relation to an axis parallel to the rotation axis (X) and wherein said angles (α, β) are equal on both braking bands and variable along the outline of the fin.

## Patentansprüche

1. Scheibe (1) für sich selbst belüftende Bremsscheibe der Art mit zwei Bremsbändern (3', 3"), von denen wenigstens eines (3') mit einer zentralen Nabe oder einem Schaft (4) mit einer Drehachse (X) verbunden ist, wobei die Bremsbänder (3', 3") parallel zueinander verbunden und wechselseitig durch Rippen (2) und Stifte (5) beabstandet sind, welche sich in Bezug auf die Drehachse (X) in einer Radialrichtung erstrecken, wobei jede Rippe (2) sich dem Umfang entlang mit einem Stift (5) abwechselt, um mit diesem einen Kühlkanal (8) für den Durchtritt von Luft zu definieren, wobei die Rippen (2) und die Stifte (5) in der Radialrichtung einen variablen Querschnitt haben, um dem Kühlkanal (8) einen radial nach außen größer werdenden Querschnitt zu verleihen,
**dadurch gekennzeichnet, dass** jede Rippe (2) sich zwischen einem inneren Endpunkt (2") und einem äußeren Endpunkt 2') mit einem Querschnitt erstreckt, der in einem Abschnitt, der im Wesentlichen zwischen den zwei Endpunkten (2', 2") liegt, minimal ist.

2. Scheibe (1) nach Anspruch 1, wobei der größte Querschnitt der Stifte (2) positioniert ist, wo der Querschnitt der Rippen (2) minimal ist.

3. Scheibe (1) nach einem der vorhergehenden Ansprüche, wobei die Rippen (2) an ihren Endpunkten (2', 2") konvex und in dem Abschnitt, wo der Querschnitt minimal ist, konkav sind.

4. Scheibe (1) nach einem der vorhergehenden Ansprüche, wobei die inneren Endpunkte (2") der Rippen (2) entlang eines Innenumfangs (6) verteilt sind und wobei die äußeren Endpunkte (2') der Rippen (2) entlang eines Außenumfangs (7) verteilt sind.

5. Scheibe (1) nach Anspruch 4, wobei die Innen- (6) und Außen- (7) Umfänge im Wesentlichen mit inneren und äußeren kreisförmigen Kanten zusammenfallen, welche die Bremsbänder (3', 3") radial begrenzen.

6. Scheibe (1) nach einem der Ansprüche 4 oder 5, wobei der Querschnitt der Rippen (2) beginnend von der Mitte der Bremsbänder (3', 3") in einer Radialrichtung bis zu dem Außenumfang (7) fortschreitend größer wird.

7. Scheibe (1) nach einem der vorhergehenden Ansprüche, wobei der radial innerste Bereich jedes Bremsbands (3', 3") jedes Paars benachbarter Rippen (2) wenigstens einen Kühlkanal (8') mit einem radial nach außen größer werdenden Querschnitt für den Durchtritt von Luft definiert.

8. Scheibe (1) nach einem der vorhergehenden Ansprüche, wobei der größte Querschnitt der Stifte (5) an der Mitte der Bremsbänder (3', 3") positioniert ist.

9. Scheibe (1) nach einem der vorhergehenden Ansprüche, wobei die Stifte (5) einen in Richtung ihrer äußersten Endpunkte radial fortschreitend kleiner wendenden Querschnitt haben.

10. Scheibe (1) nach einem der vorhergehenden Ansprüche, wobei die Länge jedes Stifts (5) ungefähr 20 - 40% und bevorzugt ungefähr 25 - 35% der radialen Ausdehnung der Bremsbänder (3', 3") ist.

11. Scheibe (1) nach einem der vorhergehenden Ansprüche, wobei die gesamte Kontaktfläche der Rippen (2) und der Stifte (5) mit dem Bremsband (3'), das mit der zentralen Nabe oder dem Schaft (4) verbunden ist, kleiner als die Kontaktfläche der Rippen (2) und der Stifte (5) mit dem anderen Bremsband (3") ist.

12. Scheibe (1) nach einem der vorhergehenden Ansprüche, wobei die gesamte Kontaktfläche der Rippen (2) und der Stifte (5) mit dem Bremsband (3'), das mit der zentralen Nabe oder dem Schaft (4) verbunden ist, zwischen 35% und 45% und bevorzugt 40% der gesamten Innenfläche des Bands (3') belegt.

13. Scheibe (1) nach Anspruch 12, wobei die Kontaktfläche der der Rippen (2) mit dem Bremsband (3'), das mit der zentralen Nabe oder dem Schaft (4) verbunden ist, zwischen 60% und 80% und bevorzugt 70% der gesamten Kontaktfläche belegt.

14. Scheibe (1) nach einem der vorhergehenden Ansprüche, wobei die gesamte Kontaktfläche der Rippen (2) und Stifte (5) mit dem Bremsband (3"), das nicht mit der zentralen Nabe oder dem Schaft (4) verbunden ist, zwischen 40% und 50% und bevorzugt 44% der gesamten Innenfläche des Bands (3") belegt.

15. Scheibe (1) nach Anspruch 14, wobei die Kontaktfläche der Rippen (2) mit dem Bremsband (3"), das nicht mit der zentralen Nabe oder dem Schaft (4) verbunden ist, zwischen 55% und 75% und bevorzugt 63% der gesamten Kontaktfläche belegt.

16. Scheibe (1) nach einem der vorhergehenden Ansprüche, wobei jeder Stift (5) mit jedem Bremsband (3', 3") durch eine Verbindungsfläche verbunden ist, deren Tangente in Bezug auf eine Achse parallel zu der Drehachse (X) einen Winkel (α, β) bildet und wobei der Winkel (β), der mit dem Band (3") gebildet wird, das nicht mit der Nabe (4) verbunden ist, größer als der Winkel (α) ist, der mit dem Band (3') gebildet wird, das mit der Nabe (4) verbunden ist.

17. Scheibe (1) nach einem der vorhergehenden Ansprüche, wobei jede Rippe (2) mit jedem Bremsband (3', 3') durch eine Verbindungsfläche verbunden ist, deren Tangente in Bezug auf eine Achse parallel zu der Drehachse (X) einen Winkel (α, β) bildet und wobei die Winkel (α, β), auf beiden Bremsbändern gleich und entlang des Umrisses der Rippe variabel sind.

## Revendications

1. Disque (1) pour autoventiler un disque de frein du type à deux bandes de freinage (3', 3"), dont au moins l'une (3') est raccordée à un moyeu ou fût central (4) ayant un axe de rotation (X), où lesdites bandes de freinage (3', 3") sont parallèles l'une à l'autre, raccordées et espacées mutuellement par des ailettes (2) et des chevilles (5) s'étendant dans une direction radiale par rapport à l'axe de rotation (X), où chaque ailette (2) alterne en circonférence avec une cheville (5) afin de définir avec celle-ci un conduit de refroidissement (8) pour le passage de l'air, dans lequel lesdites ailettes (2) et lesdites chevilles (5) ont une coupe transversale variable dans une direction radiale afin de conférer au conduit de refroidissement (8) une coupe transversale augmentant radialement vers l'extérieur,
**caractérisé en ce que** chaque ailette (2) s'étend entre une extrémité interne (2") et une extrémité externe (2') avec une coupe transversale qui est minime dans une section sensiblement intermédiaire auxdites deux extrémités (2', 2").

2. Disque (1) selon la revendication 1, dans lequel la coupe transversale la plus élevée des chevilles (5) est positionnée à l'emplacement où la coupe transversale des ailettes (2) est minimale.

3. Disque (1) selon l'une quelconque des revendications précédentes, dans lequel les ailettes (2) sont convexes à leurs extrémités (2', 2") et concaves dans la section où la coupe transversale est minime.

4. Disque (1) selon l'une quelconque des revendications précédentes, dans lequel les extrémités internes (2") des ailettes (2) sont distribuées le long d'une circonférence interne (6) et dans lequel les extrémités externes (2') des ailettes (2) sont distribuées le long d'une circonférence externe (7).

5. Disque (1) selon la revendication 4, dans lequel lesdites circonférences interne (6) et externe (7) coïncident sensiblement avec les rebords circulaires interne et externe qui délimitent radialement les bandes de freinage (3', 3").

6. Disque (1) selon l'une quelconque de revendications 4 ou 5, dans lequel, en partant du centre des bandes de freinage (3', 3"), la coupe transversale des ailettes (2) augmente progressivement en direction radiale jusqu'à la circonférence externe (7).

7. Disque (1) selon l'une quelconque des revendications précédentes, dans lequel, dans la région radiale la plus interne de chaque bande de freinage (3', 3"), chaque paire d'ailettes adjacentes (2) définit au moins un conduit de refroidissement (8'), avec une coupe transversale augmentant radialement vers l'extérieur pour le passage de l'air.

8. Disque (1) selon l'une quelconque des revendications précédentes, dans lequel la coupe transversale la plus grande des chevilles (5) est positionnée au centre des bandes de freinage (3', 3").

9. Disque (1) selon l'une quelconque des revendications précédentes, dans lequel les chevilles (5) ont une coupe transversale diminuant radialement progressivement vers leurs extrémités les plus à l'extérieur.

10. Disque (1) selon l'une quelconque des revendications précédentes, dans lequel la longueur de chaque cheville (5) est environ 20 à 40 % celle de l'extension radiale des bandes de freinage (3', 3") et de préférence environ 25 à 35 %.

11. Disque (1) selon l'une quelconque des revendications précédentes, dans lequel la surface de contact globale des ailettes (2) et des chevilles (5) avec la bande de freinage (3') raccordée au moyeu ou au fût central (4) est inférieure à la surface de contact des ailettes (2) et des chevilles (5) avec l'autre bande de freinage (3").

12. Disque (1) selon l'une quelconque des revendications précédentes, dans lequel la surface de contact globale des ailettes (2) et des chevilles (5) avec la bande de freinage (3') raccordée au moyeu ou au fût central (4) occupe 35 % à 45 % de la surface interne totale de ladite bande (3') et, de préférence, 40 %.

13. Disque (1) selon la revendication 12, dans lequel la surface de contact des ailettes (2) avec la bande de freinage (3') raccordée au moyeu ou au fût central (4) occupe 60 % à 80 % de la surface de contact globale et, de préférence, 70 %.

14. Disque (1) selon l'une quelconque des revendications précédentes, dans lequel la surface de contact globale des ailettes (2) et des chevilles (5) avec la bande de freinage (3") non raccordée au moyeu ou au fût central (4) occupe 40 % à 50 % de la surface interne totale de ladite bande (3") et, de préférence, 44 %.

15. Disque (1) selon la revendication 14, dans lequel la surface de contact des ailettes (2) avec la bande de freinage (3") non raccordée au moyeu ou au fût central (4) occupe 55 % à 75 % de la surface de contact globale et, de préférence, 63 %.

16. Disque (1) selon l'une quelconque des revendications précédentes, dans lequel chaque cheville (5) est raccordée à chaque bande de freinage (3', 3") par une surface de raccordement dont la tangente forme un angle (α, β) par rapport à un axe parallèle à l'axe de rotation (X), et dans lequel l'angle (β) formé avec la bande (3") non raccordée au moyeu (4) est supérieur à l'angle (α) formé avec la bande (3') raccordée au moyeu (4).

17. Disque (1) selon l'une quelconque des revendications précédentes, dans lequel chaque ailette (2) est raccordée à chaque bande de freinage (3', 3") par une surface de raccordement dont la tangente forme un angle (α, β) par rapport à un axe parallèle à l'axe de rotation (X), et dans lequel lesdits angles (α, β) sont égaux sur les deux bandes de freinage et variables le long du contour de l'ailette.
